(19) Europäisches Patentamt
European Patent Office
Office européen des brevets

(11) **EP 4 277 159 A1**

(12) **EUROPEAN PATENT APPLICATION**
published in accordance with Art. 153(4) EPC

(43) Date of publication:
**15.11.2023 Bulletin 2023/46**

(21) Application number: **21920890.7**

(22) Date of filing: **31.12.2021**

(51) International Patent Classification (IPC):
**H04B 7/185** (2006.01)

(52) Cooperative Patent Classification (CPC):
**H04B 7/185; H04W 84/06**

(86) International application number:
**PCT/CN2021/143991**

(87) International publication number:
**WO 2022/156519 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2021 CN 202110082473**

(71) Applicant: **Huawei Technologies Co., Ltd.
Shenzhen, Guangdong 518129 (CN)**

(72) Inventors:
• **QIAO, Yunfei**
  **Shenzhen, Guangdong 518129 (CN)**
• **ZHOU, Yue**
  **Shenzhen, Guangdong 518129 (CN)**
• **CHEN, Ying**
  **Shenzhen, Guangdong 518129 (CN)**
• **DU, Yinggang**
  **Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **WIRELESS COMMUNICATION METHOD AND DEVICE**

(57) Embodiments of this application provide a wireless communication method, and an apparatus. The method includes: A first communication apparatus receives first satellite information from a second communication apparatus, where the first satellite information includes a floating-point value of a satellite parameter; the first communication apparatus determines second satellite information based on a reference value of the satellite parameter and the first satellite information; and communicates with the second communication apparatus based on the second satellite information. The second satellite information is a complete value of the satellite parameter. The satellite parameter is represented as the reference value and the floating-point value, so that indication overheads of the parameter are reduced, and precision is improved.

S401: First satellite information (including a floating-point value of a satellite parameter)

S402: Determine second satellite information based on a reference value of the satellite parameter and the first satellite information

S403: Perform communication based on the second satellite information

FIG. 4

## Description

This application claims priority to Chinese Patent Application No. 202110082473.0, filed with the China National Intellectual Property Administration on January 21, 2021 and entitled "WIRELESS COMMUNICATION METHOD AND APPARATUS", which is incorporated herein by reference in its entirety.

## TECHNICAL FIELD

This application relates to the field of communication technologies, and in particular, to a wireless communication method, and an apparatus.

## BACKGROUND

With development of information technologies, more urgent requirements are imposed on high efficiency, mobility, diversity, and the like of communication. Currently, satellites are irreplaceable in some important fields, such as space communication, aviation communication, maritime communication, and military communication. Satellite communication has features such as a long communication distance, a large coverage area, and flexible networking, and can provide services for both fixed terminals and various mobile terminals.

Because a conventional terrestrial network cannot provide seamless coverage, especially in a place in which a base station cannot be deployed, such as a sea, a desert, or the air, a non-terrestrial communication network (non-terrestrial network, NTN) such as satellite communication or a high altitude platform is introduced into a terrestrial communication network such as a 5th generation (fifth generation, 5G) mobile communication system. A base station or some functions of a base station is or are deployed on the high altitude platform or a satellite that is little affected by a natural disaster, so that the non-terrestrial network provides seamless coverage for a terminal. This can improve reliability of the terrestrial communication network.

When the terminal communicates with the satellite, the terminal implements timing compensation, frequency compensation, neighboring cell prediction, and the like based on information about the satellite. Different from a terrestrial communication system, the satellite moves around the earth in a specified orbit. A position, speed, and beam of the satellite are changed in real time as the satellite moves. Therefore, the terminal needs to obtain related information of the satellite, which usually drives up overheads required by the satellite to indicate the related information to the terminal.

## SUMMARY

Embodiments of this application provide a wireless communication method, and an apparatus, to indicate satellite information with low signaling overheads.

According to a first aspect, an embodiment of this application provides a wireless communication method. The method includes:

A first communication apparatus receives first satellite information from a second communication apparatus, where the first satellite information includes a floating-point value of a satellite parameter; determines second satellite information based on a reference value of the satellite parameter and the first satellite information; and communicates with the second communication apparatus based on the second satellite information.

In the method provided in the first aspect, the first communication apparatus receives the floating-point value of the satellite parameter, obtains the second satellite information based on the floating-point value of the satellite parameter and the reference value of the satellite parameter, where the second satellite information is a complete value of the satellite parameter, and communicates with the second communication apparatus based on the second satellite information. Compared with a manner in which a complete value of the satellite parameter is received, a manner in which a value of the satellite parameter is limited within a range close to the reference value, and the floating-point value based on the reference value is received can reduce signaling overheads, reduce a delay, and improve indication precision.

In a possible implementation, the first communication apparatus obtains the reference value of the satellite parameter based on a satellite identifier. The first communication apparatus stores a mapping relationship between a satellite identifier and a reference value of the satellite parameter. After receiving the first satellite information from the second communication apparatus, the first communication apparatus may learn of the satellite identifier corresponding to the second communication apparatus, and then obtain the reference value of the satellite parameter based on the satellite identifier and the mapping relationship.

In this possible implementation, the first communication apparatus can obtain the reference value of the satellite parameter based on the satellite identifier. The satellite identifier can be obtained when the information from the second communication apparatus is received, and the reference value of the satellite parameter can be obtained without additional signaling, so that signaling can be also reduced.

In a possible implementation, the first communication apparatus receives first indication information, where the first indication information indicates the reference value of the satellite parameter.

In this possible implementation, the first communication apparatus obtains the reference value of the satellite parameter by receiving the first indication information. The first indication information can more flexibly indicate the reference value of the satellite parameter based on an actual satellite parameter, to ensure accuracy of the second satellite information obtained by the first communication apparatus.

In a possible implementation, the first indication information includes first index information, and the first communication apparatus obtains the reference value of the satellite parameter based on the first index information.

In this possible implementation, the first communication apparatus stores a mapping relationship between index information and a reference value of the satellite parameter, and obtains the reference value of the satellite parameter based on the first index information, so that flexibility is higher. Optionally, the index information may be orbit identification information. For example, when a satellite corresponding to the second communication apparatus is a satellite newly transmitted on an orbit, the second communication apparatus may reuse the reference value of the satellite parameter that corresponds to the orbit and that is stored in the first communication apparatus, and does not need to re-deliver the reference value of the satellite, to support extension of a satellite network.

In a possible implementation, the first indication information includes the reference value of the satellite parameter.

In this possible implementation, the first indication information directly includes the reference value of the satellite parameter, and processing complexity of the first communication apparatus is low. When a period of receiving the first indication information is longer than a period of receiving the first satellite information, signaling overheads can be reduced.

In a possible implementation, the first satellite information is carried in a first system message, the first indication information is carried in a second system message, and a delivery period of the first system message is different from a delivery period of the second system message.

In this possible implementation, the first satellite information and the first indication information are carried in different system messages, and delivery periods of the first satellite information and the first indication information are different. Specifically, the first satellite information and the first indication information may be delivered and received by using radio resource control (radio resource control, RRC) signaling. When the period for receiving the first indication information is longer than the period for receiving the first satellite information, the complete value of the satellite parameter does not need to be carried in the first satellite information each time, the reference value of the satellite parameter is delivered in a relatively long period, and the floating-point value of the satellite parameter is carried in the first satellite information. This can improve indication precision and reduce signaling overheads.

In a possible implementation, the first communication apparatus receives the first satellite information sent by the second communication apparatus at a first moment, where the first satellite information includes a first floating-point value of the satellite parameter; and the first communication apparatus receives the first satellite information sent by the second communication apparatus at a second moment, where the first satellite information includes a second floating-point value of the satellite parameter, and the second floating-point value is a value relative to the first floating-point value.

In this possible implementation, the first communication apparatus can obtain, based on the reference value of the satellite parameter and the first floating-point value sent by the second communication apparatus at the first moment, a complete value of the satellite parameter corresponding to the first moment. The second floating-point value sent by the second communication apparatus at the second moment is the value relative to the first floating-point value, that is, a floating-point value of the first floating-point value. When the reference value of the satellite parameter does not change, the first communication apparatus can obtain, based on the complete value of the satellite parameter corresponding to the first moment and the second floating-point value, a complete value of the satellite parameter corresponding to the second moment, so that signaling overheads can be also reduced on the basis of further saving signaling overheads.

In a possible implementation, the first communication apparatus receives second indication information, where the second indication information includes an indication manner of the satellite parameter.

In other words, the second indication information includes content included in the satellite parameter carried in the first satellite information. The indication manner may be the first floating-point value or the second floating-point value, or may also be the complete value of the satellite parameter. The first communication apparatus can learn of, based on the second indication information, information about the satellite parameter carried in the first satellite parameter, to ensure accuracy of obtaining the complete value of the satellite parameter by the first communication apparatus.

In a possible implementation, the satellite parameter includes an orbit parameter, and the orbit parameter includes one or more of the following parameters: orbital semi-major axis information, an orbital plane inclination angle at reference time, an eccentricity, an argument of perigee, a longitude of ascending node of orbit plane, and a mean anomaly at reference time.

The orbit parameter of a satellite is used to obtain position information of the satellite, to implement steps such as uplink synchronization. Satellites usually operate in a fixed orbit, and the orbit parameter of the satellite fluctuates within a specific range. Therefore, the orbit parameter of the satellite can be indicated and obtained by using the reference value and the floating-point value. This can reduce signaling overheads, and improve indication precision.

In a possible implementation, the satellite parameter includes a beam parameter, where the beam parameter includes an azimuth and/or a pitch angle of a beam pointing axis relative to a satellite motion direction.

The beam parameter of the satellite is used to obtain a coverage condition of a current serving beam or cell of the satellite, where the parameter such as the azimuth and/or the pitch angle of a beam pointing axis relative to a satellite motion direction may fluctuate within a range. Therefore, the beam parameter of the satellite can be indicated and obtained by using the reference value and the floating-point value. This can reduce signaling, and improve indication precision.

In a possible implementation, the first communication apparatus receives third indication information, where the third indication information indicates an update amount of the reference value of the satellite parameter, and the first communication apparatus updates the reference value of the satellite parameter based on the third indication information.

As the satellite moves, the reference value of the satellite parameter may be offset. Consequently, a complete value of the satellite parameter obtained by the first communication apparatus is no longer accurate. In this possible implementation, the update amount of the reference value of the satellite parameter is obtained based on the third indication information to update the reference value, so that accuracy of obtaining the complete value of the satellite parameter by the first communication apparatus can be improved.

The third indication information may be delivered periodically based on a timer, or may be delivered in response to request information sent by the first communication apparatus.

According to a second aspect, an embodiment of this application provides a wireless communication method. The method includes:

A second communication apparatus determines first satellite information, where the first satellite information includes a floating-point value of a satellite parameter; the second communication apparatus sends the first satellite information to a first communication apparatus; and the first satellite information and a reference value of the satellite parameter are used to obtain second satellite information.

In the method provided in the second aspect, the first satellite information determined by the second communication apparatus includes the floating-point value of the satellite parameter, and the floating-point value is a differential value of a complete value of the satellite parameter relative to the reference value of the satellite parameter. The second communication apparatus sends the first satellite information to the first communication apparatus, so that the first communication apparatus obtains the second satellite information based on the reference value of the satellite parameter and the first satellite information. The second satellite information includes the complete value of the satellite parameter. Compared with a manner in which the complete value of the satellite parameter is delivered, a manner in which a value of the satellite parameter is limited within a range close to the reference value, and a floating-point value is delivered based on the reference value can reduce signaling overheads, reduce a delay, and improve indication precision.

In a possible implementation, the second communication apparatus sends first indication information to the first communication apparatus, where the first indication information is used by the first communication apparatus to obtain the reference value of the satellite parameter.

In this possible implementation, the second communication apparatus indicates the reference value of the satellite parameter based on the first indication information, and can more flexibly select the reference value of the satellite parameter based on an actual value of the satellite parameter, to ensure accuracy of obtaining the second satellite information by the first communication apparatus based on the reference value.

In a possible implementation, the first indication information includes first index information.

In this possible implementation, receive and transmit ends store a mapping relationship between index information and a reference value of the satellite parameter. The reference value of the satellite parameter is indicated based on the first index information, so that flexibility is higher. Optionally, the index information may be orbit identification information. For example, when a satellite corresponding to the second communication apparatus is a satellite newly transmitted on an orbit, the satellite may reuse a stored reference value of the satellite parameter that corresponds to the orbit, and does not need to re-deliver the reference value of the satellite, to support extension of a satellite network.

In a possible implementation, the first indication information includes the reference value of the satellite parameter.

In this possible implementation, the first indication information directly includes the reference value of the satellite parameter, so that processing complexity of the first communication apparatus can be reduced. When a period of delivering the first indication information is longer than a period of delivering the first satellite information, signaling overheads can be reduced.

In a possible implementation, the first satellite information is carried in a first system message, the first indication information is carried in a second system message, and a sending period of the first system message is different from a sending period of the second system message.

In this possible implementation, the first satellite information and the first indication information are carried in different system messages, and delivery periods of the first satellite information and the first indication information are different. Specifically, the first satellite information and the first indication information may be delivered and received by using radio resource control (radio resource control, RRC) signaling. When a period for receiving the first indication information is longer than a period for receiving the first satellite information, the complete value of the satellite parameter does not need to be carried in the first satellite information each time, the reference value of the satellite parameter is delivered in a relatively long period, and the floating-point value of the satellite parameter is carried in the first satellite information. This can improve indication precision and reduce signaling overheads.

In a possible implementation, the second communication apparatus sends the first satellite information at a first moment, where the first satellite information includes a first floating-point value of the satellite parameter; and the second communication apparatus sends the first satellite information at a second moment, where the first satellite information includes a second floating-point value of the satellite parameter, and the second floating-point value is a value relative to the first floating-point value.

In this possible implementation, the second communication apparatus sends, at the first moment, the first satellite information including the first floating-point value, so that the first communication apparatus obtains, based on the reference value of the satellite parameter and the first floating-point value, a complete value of the satellite parameter corresponding to the first moment. The second floating-point value sent by the second communication apparatus at the second moment is the value relative to the first floating-point value, that is, a floating-point value of the first floating-point value. When the reference value of the satellite parameter does not change, the first communication apparatus is enabled to obtain, based on the complete value of the satellite parameter corresponding to the first moment and the second floating-point value, a complete value of the satellite parameter corresponding to the second moment, so that signaling overheads can be also reduced on the basis of further saving signaling overheads.

In a possible implementation, the first communication apparatus receives second indication information, where the second indication information includes an indication manner of the satellite parameter.

In other words, the second indication information includes content included in the satellite parameter carried in the first satellite information. The indication manner may be the first floating-point value or the second floating-point value, or may also be the complete value of the satellite parameter. The first communication apparatus is enabled to learn of, based on the second indication information, information about the satellite parameter carried in the first satellite parameter, to ensure accuracy of obtaining the complete value of the satellite parameter by the first communication apparatus.

In a possible implementation, the satellite parameter includes an orbit parameter, and the orbit parameter includes one or more of the following parameters: orbital semi-major axis information, an orbital plane inclination angle at reference time, an eccentricity, an argument of perigee, a longitude of ascending node of orbit plane, and a mean anomaly at reference time.

The orbit parameter of a satellite is used to obtain position information of the satellite, to implement steps such as uplink synchronization. Satellites usually operate in a fixed orbit, and the orbit parameter of the satellite fluctuates within a specific range. Therefore, the orbit parameter of the satellite can be indicated and obtained by using the reference value and the floating-point value. This can reduce signaling overheads, and improve indication precision.

In a possible implementation, the satellite parameter includes a beam parameter, where the beam parameter includes an azimuth and/or a pitch angle of a beam pointing axis relative to a satellite motion direction.

The beam parameter of the satellite is used to obtain a coverage condition of a current serving beam or cell of the satellite, where the parameter such as the azimuth and/or the pitch angle of a beam pointing axis relative to a satellite motion direction may fluctuate within a range. Therefore, the beam parameter of the satellite can be indicated and obtained by using the reference value and the floating-point value. This can reduce signaling, and improve indication precision.

In a possible implementation, the second communication apparatus sends third indication information, where the third indication information indicates an update amount of the reference value of the satellite parameter.

As the satellite moves, the reference value of the satellite parameter may be offset. Consequently, a complete value of the satellite parameter obtained by the first communication apparatus is no longer accurate. In this possible implementation, the update amount of the reference value of the satellite parameter is obtained based on the third indication information to update the reference value, so that accuracy of obtaining the complete value of the satellite parameter by the first communication apparatus can be improved.

According to a third aspect, an embodiment of this application further provides a communication apparatus. The communication apparatus may be used as the first communication apparatus according to the first aspect. The communication apparatus may be a terminal device, or may be an apparatus (for example, a chip, a chip system, or a circuit) in a terminal device, or may be an apparatus that can be used together with a terminal device. In a possible implementation, the communication apparatus may include modules or units that are in one-to-one correspondence with the methods/operations/steps/actions described in the first aspect. The modules or units may be implemented by a hardware circuit, software, or a combination of a hardware circuit and software. In a possible implementation, the communication apparatus may include a processing unit and an input/output unit. The processing unit is configured to invoke the input/output unit to perform a receiving and/or sending function. For example:

An input/output unit is configured to receive first satellite information from a second communication apparatus, where the first satellite information includes a floating-point value of a satellite parameter; and

a processing unit is configured to determine second satellite information based on a reference value of the satellite parameter and the first satellite information, where

the input/output unit is further configured to communicate with the second communication apparatus based on the second satellite information.

In a possible implementation, the processing unit is further configured to obtain the reference value of the satellite parameter based on a satellite identifier.

In a possible implementation, the input/output unit is further configured to receive first indication information, where the first indication information is used to obtain the reference value of the satellite parameter.

In a possible implementation, the first indication information includes first index information, and the processing unit is configured to obtain the reference value of the satellite parameter based on the first index information; or the first indication information includes the reference value of the satellite parameter.

In a possible implementation, that an input/output unit is configured to receive first satellite information from a second communication apparatus includes: The input/output unit is specifically configured to receive the first satellite information sent by the second communication apparatus at a first moment, where the first satellite information includes a first floating-point value of the satellite parameter; and the input/output unit is further configured to receive the first satellite information sent by the second communication apparatus at a second moment, where the first satellite information includes a second floating-point value of the satellite parameter, and the second floating-point value is a value relative to the first floating-point value.

In a possible implementation, the input/output unit is further configured to receive second indication information, where the second indication information includes an indication manner of the satellite parameter.

In a possible implementation, the satellite parameter includes an orbit parameter, and the orbit parameter includes one or more of the following parameters: orbital semi-major axis information, an orbital plane inclination angle at reference time, an eccentricity, an argument of perigee, a longitude of ascending node of orbit plane, and a mean anomaly at reference time.

In a possible implementation, the satellite parameter includes a beam parameter, where the beam parameter includes an azimuth and/or a pitch angle of a beam pointing axis relative to a satellite motion direction.

In a possible implementation, the input/output unit is further configured to receive third indication information, where the third indication information indicates an update amount of the reference value of the satellite parameter; and the processing unit is further configured to update the reference value of the satellite parameter based on the third indication information.

It should be noted that, for beneficial effects of the implementations of the communication apparatus provided in the third aspect of the embodiments of this application, refer to beneficial effects of the wireless communication method according to the first aspect. Details are not described herein again.

According to a fourth aspect, an embodiment of this application further provides a communication apparatus. The communication apparatus may be used as the second communication apparatus according to the second aspect. The communication apparatus may be a network device (a satellite), or may be an apparatus (for example, a chip, a chip system, or a circuit) in a network device, or may be an apparatus that can be used together with a network device. In a possible implementation, the communication apparatus may include modules or units that are in one-to-one correspondence with the methods/operations/steps/actions described in the second aspect. The modules or units may be implemented by a hardware circuit, software, or a combination of a hardware circuit and software. In a possible implementation, the communication apparatus may include a processing unit and an input/output unit. The processing unit is configured to invoke the input/output unit to perform a receiving and/or sending function. For example:

A processing unit is configured to determine first satellite information, where the first satellite information includes a floating-point value of a satellite parameter; and

an input/output unit is configured to output the first satellite information, where the first satellite information and a reference value of the satellite parameter are used to obtain second satellite information.

In a possible implementation, the input/output unit is further configured to output first indication information, where the first indication information is used to obtain the reference value of the satellite parameter.

In a possible implementation, the first indication information includes first index information, or the first indication information includes the reference value of the satellite parameter.

In a possible implementation, the first satellite information is carried in a first system message, the first indication information is carried in a second system message, and a sending period of the first system message is different from a sending period of the second system message.

In a possible implementation, the input/output unit is specifically configured to output the first satellite information at a first moment, where the first satellite information includes a first floating-point value of the satellite parameter; and the input/output unit is specifically configured to output the first satellite information at a second moment, where the first satellite information includes a second floating-point value of the satellite parameter, and the second floating-point value is a value relative to the first floating-point value.

In a possible implementation, the input/output unit is configured to receive second indication information, where the second indication information includes an indication manner of the satellite parameter.

In a possible implementation, the satellite parameter includes an orbit parameter, and the orbit parameter includes one or more of the following parameters: orbital semi-major axis information, an orbital plane inclination angle at reference time, an eccentricity, an argument of perigee, a longitude of ascending node of orbit plane, and a mean anomaly at reference time.

In a possible implementation, the satellite parameter includes a beam parameter, where the beam parameter includes an azimuth and/or a pitch angle of a beam pointing axis relative to a satellite motion direction.

In a possible implementation, the input/output unit is further configured to output third indication information, where the third indication information indicates an update amount of the reference value of the satellite parameter.

It should be noted that, for beneficial effects of the implementations of the communication apparatus provided in the fourth aspect of the embodiments of this application, refer to beneficial effects of the wireless communication method according to the second aspect. Details are not described herein again.

According to a fifth aspect, an embodiment of this application further provides a communication apparatus. The communication apparatus includes a processor, configured to execute a computer program or executable instructions stored in a memory, where when the computer program or the executable instructions are executed, the apparatus is enabled to perform the method according to the first aspect and the possible implementations of the first aspect.

In a possible implementation, the processor and the memory are integrated together.

In another possible implementation, the memory is located outside the communication apparatus.

The communication apparatus further includes a communication interface. The communication interface is configured for communication between the communication apparatus and another device, for example, to send or receive data and/or a signal. For example, the communication interface may be a transceiver, a circuit, a bus, a module, or another type of communication interface.

According to a sixth aspect, an embodiment of this application further provides a communication apparatus. The communication apparatus includes a processor, configured to execute a computer program or executable instructions stored in a memory, where when the computer program or the executable instructions are executed, the apparatus is enabled to perform the method according to the second aspect and the possible implementations of the second aspect.

In a possible implementation, the processor and the memory are integrated together.

In another possible implementation, the memory is located outside the communication apparatus.

The communication apparatus further includes a communication interface. The communication interface is configured for communication between the communication apparatus and another device, for example, data and/or signal sending or receiving. For example, the communication interface may be a transceiver, a circuit, a bus, a module, or another type of communication interface.

According to a seventh aspect, an embodiment of this application further provides a communication apparatus. The communication apparatus includes an input/output interface and a logic circuit. The input/output interface is configured to input or output a signal or data. The input/output interface is specifically configured to receive first satellite information, the logic circuit is configured to perform the method according to any one of the first aspect and the possible implementations of the first aspect, and obtain second satellite information based on the first satellite information, and the input/output interface is further configured to communicate with a second communication apparatus based on the second satellite information.

According to an eighth aspect, an embodiment of this application further provides a communication apparatus. The communication apparatus includes an input/output interface and a logic circuit. The input/output interface is configured to input or output a signal or data. The logic circuit is configured to perform the method according to any one of the second aspect and the possible implementations of the second aspect to determine first satellite information. The input/output interface is specifically configured to output the first satellite information.

According to a ninth aspect, an embodiment of this application further provides a computer-readable storage medium. The computer-readable storage medium stores a computer program, and the computer program is executed by a processor, so that some or all steps of the method according to any one of the first aspect and the possible implementations of the first aspect or any one of the second aspect and the possible implementations of the second aspect are performed.

According to a tenth aspect, an embodiment of this application further provides a computer program product including executable instructions, where when the computer program product runs on user equipment, some or all of the steps in the method according to any one of the first aspect and the possible implementations of the first aspect or any one of the second aspect and the possible implementations of the second aspect are performed.

According to an eleventh aspect, an embodiment of this application further provides a chip system. The chip system includes a processor, and may further include a memory, configured to implement the method according to any one of the first aspect and the possible implementations of the first aspect, and the method according to any one of the second aspect and the possible implementations of the second aspect. The chip system may include a chip, or may include a chip and another discrete device.

According to a twelfth aspect, an embodiment of this application further provides a communication system, the communication system includes the communication apparatus provided in the third aspect and the communication apparatus provided in the fourth aspect.

According to a thirteenth aspect, an embodiment of this application provides a communication apparatus, and the communication apparatus is configured to perform the method according to any one of the first aspect and the possible implementations of the first aspect.

According to a fourteenth aspect, this application further provides a communication apparatus, and the communication apparatus is configured to perform the method according to any one of the second aspect and the possible implementations of the second aspect.

**BRIEF DESCRIPTION OF DRAWINGS**

The following describes some accompanying drawings in embodiments of this application.

FIG. 1 is a schematic diagram of a communication system to which an embodiment of this application is applicable;

FIG. 2 is a schematic diagram of an application scenario according to an embodiment of this application;

FIG. 3 is a schematic diagram of a Kepler orbit parameter;

FIG. 4 is a schematic diagram of interaction of a wireless communication method according to an embodiment of this application;

FIG. 5 is a schematic diagram of interaction of another wireless communication method according to an embodiment of this application;

FIG. 6 is a schematic diagram of interaction of still another wireless communication method according to an embodiment of this application;

FIG. 7 is a schematic diagram of a communication apparatus according to an embodiment of this application;

FIG. 8 is a schematic diagram of another communication apparatus according to an embodiment of this application; and

FIG. 9 is a schematic diagram of still another communication apparatus according to an embodiment of this application.

**DESCRIPTION OF EMBODIMENTS**

Embodiments of this application provide a wireless communication method, and an apparatus, to indicate satellite information with a low delay and low signaling overheads.

The following describes embodiments of this application with reference to the accompanying drawings in embodiments of this application.

In this application, "/" represents "or". A term "and/or" describes only an association relationship between associated objects and indicates that there may be three relationships. For example, A and/or B may represent the following three cases: Only A exists, both A and B exist, and only B exists. In this specification and claims in embodiments of this application, the terms "first", "second", and the like are intended to distinguish between different objects but do not indicate a particular order of the objects. For example, a first communication apparatus, a second communication apparatus, and the like are used to distinguish different communication apparatuses, but are not used to describe a particular order of the target objects. In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. In descriptions of embodiments of this application, unless otherwise specified, "a plurality of" means two or more. For example, a plurality of processing units means two or more processing units; and a plurality of systems mean two or more systems.

The technical solutions of this application are applicable to a non-terrestrial network (non-terrestrial network, NTN) system such as an uncrewed aerial vehicle, a satellite communication system, or high altitude platform station (high altitude platform station, HAPS) communication. A satellite communication system is used as an example. The satellite communication system may be integrated into an existing mobile communication system, for example, a 4th generation (4th generation, 4G) communication system such as a long term evolution (long term evolution, LTE) system, a 5th generation (5th generation, 5G) communication system such as a new radio (new radio, NR) system, and another future mobile communication system.

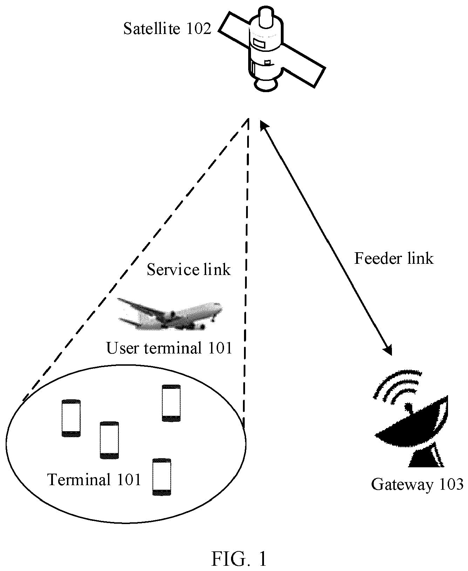

FIG. 1 is an example of a communication system to which an embodiment of this application is applicable. As shown in FIG. 1, a satellite and a gateway (gateway) are network devices, and are configured to provide a communication service for a terminal. The gateway may also be referred to as a terrestrial station, a gateway station, or the like. A link between the satellite and the terminal is referred to as a service link (service link), and a link between the satellite and the gateway is referred to as a feeder link (feeder link).

When the satellite works in a transparent (transparent) mode, the satellite has a relay forwarding function. The gateway has a function of a base station or some functions of a base station. Optionally, the gateway may be considered as a terrestrial station; or a terrestrial station and the gateway may be separately deployed.

When the satellite works in a regenerative (regenerative) mode, the satellite has a data processing capability and a function of a base station or some functions of a base station. The satellite can be considered as a base station.

The satellite mentioned in this embodiment of this application may be a satellite base station, or a network device carried on the satellite. In this application, the satellite base station, the gateway, or the terrestrial station is referred to as a network device.

The network device in this application may be an evolved NodeB (evolved NodeB, eNB or eNodeB) in LTE, or a base station in a 5G network, a broadband network service gateway (broadband network gateway, BNG), an aggregation switch, a non-3rd Generation Partnership Project (3rd generation partnership project, 3GPP) access device, or the like. This is not specifically limited in embodiments of this application. Optionally, the base station in embodiments of this application may include base stations in various forms, for example, a macro base station, a micro base station (also referred to as a small cell), a relay station, an access point, a next-generation base station (gNodeB, gNB), a transmitting and receiving point (transmitting and receiving point, TRP), a transmitting point (transmitting point, TP), a mobile switching center, a wireless access point (Wi-Fi AP), a device that provides a base station function in a device-to-device (Device-to-Device, D2D), vehicle-to-everything (vehicle-to-everything, V2X), machine-to-machine (machine-to-machine, M2M) communication, and Internet of Things (Internet of Things) communication, and the like. This is not specifically limited in embodiments of this application.

The network device may communicate and interact with a core network device, to provide a communication service for the terminal device. For example, the core network device is a device in a 5G core network (core network, CN). As a bearer network, a core network provides an interface to a data network, provides communication connection, authentication, management, and policy control for user equipment (user equipment, UE), bears data services, and the like. The CN may further include network elements such as an access and mobility management function (Access and Mobility Management Function, AMF), a session management function (Session Management Function, SMF), an authentication server function (Authentication Server Function, AUSF), a policy control function (Policy control Function, PCF), and a user plane function (User Plane Function, UPF).

The terminal mentioned in embodiments of this application may be an Internet of Things terminal, and may be specifically user equipment (user equipment, UE), an access terminal, a subscriber unit (subscriber unit), a subscriber station, a mobile station (mobile station), a remote station, a remote terminal, a mobile device, a user terminal (terminal equipment), a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital processing (personal digital assistant, PDA), a handheld device with a wireless communication function, a computing device, another processing device connected to a wireless modem, a vehicle-mounted device, a communication device carried on a high-altitude aircraft, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation security (transportation safety), a wireless terminal in a smart city (smart city), a wireless terminal in a smart home (smart home), a terminal device in a 5G network or a future communication network, or the like. This is not limited in this application.

Based on different orbit heights, satellite communication systems can be classified into the following three types: a high earth orbit (Geostationary Earth Orbit, GEO) satellite communication system, also referred to as synchronous orbit satellite system, a medium earth orbit (Medium Earth Orbit, MEO) satellite communication system, and a low earth orbit (Low Earth Orbit, LEO) satellite communication system. A GEO satellite, also referred to as a geostationary orbit satellite and with an orbit height of 35786 km, has main advantages of being stationary relative to the ground and providing a very large coverage area. However, the GEO satellite also has prominent disadvantages. For example, a distance between the GEO satellite and the earth is abnormally long, and a large-diameter antenna is required; a transmission delay is about 0.5s, which is long, and cannot meet a real-time service requirement; and an orbit resource of the GEO satellite is in shortage, launch costs are high, and coverage cannot be provided for bipolar regions. A MEO satellite has an orbit height with 2000-35786 km, and can provide global coverage with a small quantity of satellites. However, a transmission delay of the MEO satellite is longer than a transmission delay of a LEO satellite. Therefore, the MEO satellite is mainly used for positioning and navigation. The low earth orbit (LEO) satellite has an orbit height with 300-2000 km. Compared with the MEO satellite and the GEO satellite, the LEO satellite has a lower orbit height, a shorter data transmission delay, less power loss, and lower launch costs.

In satellite communication, a network topology of the satellite changes constantly as the satellite moves. Because the satellite moves around the earth in a specified orbit, each satellite corresponds to one set of ephemeris data, including different space positions of the satellite at different moments. A ground device may calculate the topology of the entire satellite network by obtaining ephemeris data. Each satellite in a global navigation satellite system (global navigation satellite system, GNSS) has ephemeris information. The satellite delivers ephemeris information based on a specified rule through a navigation message. The terminal needs to listen to navigation for more than 750s to obtain complete ephemeris. This is time-consuming.

Generally, an ephemeris parameter used for satellite prediction includes the following six orbit parameters: an orbital semi-major axis a (or a square root $\sqrt{a}$ of an orbital semi-major axis), an eccentricity e, an argument of perigee $\omega$, an orbital plane inclination angle $i_0$ at reference time, a longitude of ascending node of orbit plane $\Omega_0$, and a mean anomaly $M_0$ at reference time. The foregoing parameters may also be Kepler orbit parameters. The terminal obtains, based on ephemeris reference time $t_{0e}$ and the Kepler orbit parameters, position information of a currently observed satellite and satellite information of another satellite on the satellite network. The foregoing ephemeris reference time and the Kepler orbit parameters may be referred to as necessary ephemeris parameters.

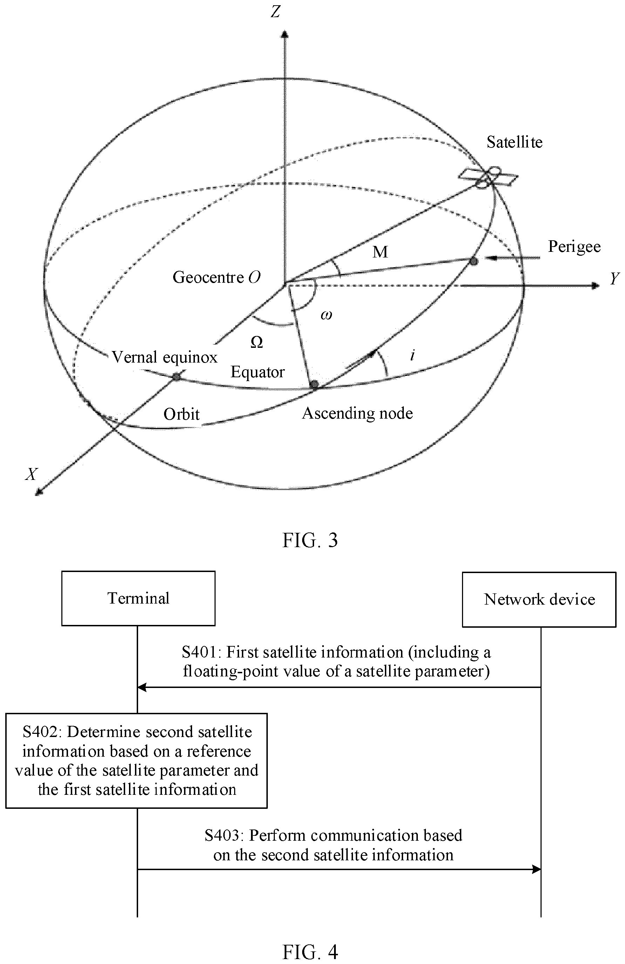

FIG. 3 is a schematic diagram of a Kepler orbit parameter. X, Y, and Z are coordinates in an earth centered inertial (ECI) coordinate system. Alternatively, X, Y, and Z may be coordinates in an earth-centered earth-fixed (earth-centered earth-fixed, ECEF) coordinate system.

A square root $\sqrt{a}$ of an orbital semi-major axis (square root of semi-major axis) is a square root of half a major axis of a satellite orbit. When the satellite orbit is a circle, the semi-major axis is an orbit radius.

An eccentricity (Eccentricity) e, also referred to as an eccentricity ratio, can be explained as a degree to which an orbital shape deviates from a circle, and is defined as a ratio of a distance between two focal points of an ellipse to a length of a major axis.

An argument of perigee (Argument of perigee) $\omega$ is an angle measured counterclockwise from an ascending node along an orbit of a planet to a perigee.

An orbital plane inclination angle $i_0$ at reference time (Mean anomaly at reference time) is an orbital plane inclination angle at the reference time $t_{0e}$, and the orbital plane inclination angle is an inclination angle between a satellite orbital plane and an equatorial plane.

A longitude of ascending node of orbit plane (Longitude of ascending node of orbit plane) $\Omega_0$ is a longitude of the ascending node when the vernal equinox is an origin of longitude.

A mean anomaly $M_0$ at reference time (Mean anomaly at reference time) is a mean anomaly at the reference time $t_{0e}$, and is an included angle formed between a perigee, the geocentre and a satellite.

The foregoing parameters are defined by using an equator plane as a reference plane, and may also be defined by using an ecliptic plane as a reference plane.

In addition, the terminal further needs to obtain coverage of a current serving beam or cell. In this case, beam-related information needs to be obtained, including an azimuth and a pitch angle (a coordinate of a beam pointing axis on the ground) of the beam pointing axis relative to a satellite motion direction, widths that are of the beam in two directions and that are perpendicular to each other, time plan information (including a start time and duration of the beam), and the like. The terminal can determine coverage of a current serving beam or a cell and coverage of a neighboring beam or a neighboring cell based on a beam parameter, to complete neighboring cell prediction. The foregoing beam parameters may be referred to as necessary beam parameters.

Signaling overheads may be also reduced when the satellite information such as the orbit parameter and the beam parameter is delivered.

To resolve the foregoing problem, this application provides a wireless communication method, to reduce signaling overheads for indicating and obtaining satellite information.

A first communication apparatus in this application may be a terminal, and a second communication apparatus may be a network device, for example, a satellite base station, a gateway, or a terrestrial station. The following provides descriptions by using the first communication apparatus as the terminal and the second communication apparatus as the network device.

FIG. 4 is a schematic diagram of interaction of a wireless communication method according to this embodiment of this application. In the method shown in FIG. 4, a terminal receives first satellite information including a floating-point value, determines, based on the first satellite information, second satellite information including an actual value of a satellite parameter, and performs communication based on the second satellite information.

S401: A network device sends the first satellite information to the terminal, and correspondingly, the terminal receives the first satellite information sent by the network device.

The first satellite information includes the floating-point value of the satellite parameter. The floating-point value of the satellite parameter is a difference between the actual value of the satellite parameter and a reference value of the satellite parameter. The satellite parameter includes an orbit parameter and/or a beam parameter. The orbit parameter includes one or more of the following: an orbital semi-major axis a (or a square root $\sqrt{a}$ of an orbital semi-major axis), an eccentricity e, an argument of perigee $\omega$, an orbital plane inclination angle $i_0$ at reference time, a longitude of ascending node of orbit plane $\Omega_0$, and a mean anomaly $M_0$ at reference time. The beam parameter includes: coordinates of a beam pointing axis on the ground (or an azimuth and a pitch angle of the beam pointing axis relative to a satellite motion direction), widths that are of beams in two directions and that are perpendicular to each other, and time plan information (including a start time and duration of the beam).

In a possible implementation, the network device may send the first satellite information to the terminal by using radio resource control (radio resource control, RRC) signaling, and the first satellite information is carried in system information, for example, a system information block (system information block, SIB). Indication information may also be carried in the SIB.

S402: The terminal determines the second satellite information based on the first satellite information and the reference value of the satellite parameter.

The second satellite information is a complete value of the satellite parameter. Specifically, the terminal determines the complete value of the satellite parameter based on the reference value of the satellite parameter and the floating-point value of the satellite parameter included in the first satellite information.

The terminal may obtain the reference value of the satellite parameter in the following plurality of possible implementations.

In a possible implementation, the terminal device stores the reference value of the satellite parameter. For example, the reference value of the satellite parameter is stored when the terminal device is delivered from a factory, or the reference value of the satellite parameter is stored in a subscriber identity module (subscriber identity module, SIM) card of the terminal device. Specifically, the terminal may store a table of a mapping relationship between a reference value of the satellite parameter and a satellite identifier (identifier, ID). The terminal obtains the corresponding reference value of the satellite parameter based on the satellite ID.

In this possible implementation, the terminal stores the reference value of the satellite parameter, and the network device no longer needs to send the reference value to the terminal through an air interface, so that signaling overheads can be reduced.

In another possible implementation, when the terminal accesses a network for the first time, the network device sends the reference value of the satellite parameter to the terminal device, and the terminal receives and stores the reference value of the satellite parameter. Specifically, the terminal stores a mapping relationship between a satellite ID and a reference value of the satellite parameter. That the terminal accesses the network for the first time means that the terminal accesses the network through a random access process, or may mean that the terminal is handed over from one network to another network. The terminal then obtains the corresponding reference value of the satellite parameter based on the satellite ID.

In this possible implementation, the terminal obtains the reference value of the satellite parameter when accessing the network for the first time, and the network device only needs to deliver the floating-point value of the satellite parameter to the terminal in a subsequent process, so that signaling overheads can be reduced.

In still another possible implementation, the network device sends first indication information to the terminal, and the terminal receives the first indication information sent by the network device, where the first indication information is used to obtain the reference value of the satellite parameter. The first indication information includes the reference value of the satellite parameter or a first index.

The network device indicates the reference value of the satellite parameter by using the first indication information, and may more flexibly select the reference value based on the actual value of the satellite parameter.

Optionally, the first indication information includes the first index information, the terminal stores a mapping relationship between an index value and a reference value of the satellite parameter, and the terminal obtains the reference value of the satellite parameter based on the first index information and the mapping relationship. The mapping relationship may be stored when the terminal is delivered from the factory, is stored in the SIM card, or is obtained when the terminal accesses the network for the first time. In a possible implementation, the first index may be an orbit identifier. For satellites in a same orbit, satellite parameters such as an orbital plane inclination angle $i_0$ at reference time and a longitude of ascending node of orbit plane $\Omega_0$ are the same or similar, and therefore reference values can be shared.

The network device indicates index information, and the terminal obtains the reference value based on the obtained index information, and has better scalability. For example, when a satellite is added to the orbit, the stored reference value in the terminal can still be used, and a complete reference value does not need to be re-delivered.

Optionally, the first indication information includes the reference value of the satellite parameter. In a possible implementation, the network device carries the first indication information in a system message. The first satellite information and the first indication information may be carried in different system messages. Possibly, a sending period of the first satellite information is different from a sending period of the first indication information, and the sending period of the first indication information is longer than the sending period of the first satellite information.

Compared with a manner in which the first satellite information carries the actual value of the satellite parameter, a manner in which the reference value of the satellite parameter is sent in a long period, and the floating-point value of the satellite parameter is carried in the first satellite information can reduce signaling overheads.

In yet another possible implementation, the terminal first obtains or stores a value range of the satellite parameter, and then determines, based on fourth indication information sent by the network device or by default, that the reference value of the satellite parameter is a minimum value, a maximum value, or an intermediate value in the value range. The terminal may obtain or store the value range of the satellite parameter in the foregoing possible implementations, for example, store the value range when the terminal is delivered from the factory, store the value range in the SIM card, obtain the value range when the terminal accesses the network for the first time, or the network device indicates the value range of the satellite parameter based on the first indication information. Details are not described herein again.

In the manner in which the network device sends the information indicating the minimum value, the maximum value, or the intermediate value in the reference value range of the satellite parameter, the network device may select, from the three values based on the actual value of the satellite parameter, a value closest to the actual value as the reference value, so that indication overheads can be also reduced.

It should be noted that the network device may send the first indication information and the fourth indication information by using RRC signaling. For example, the first indication information and the fourth indication information may be carried in the system message SIB. Optionally, the first indication information is carried in a same system message, or is carried in different system messages.

S403: The terminal performs communication based on the second satellite information.

The second satellite information includes the complete value of the satellite parameter. The terminal implements operations such as uplink synchronization, cell prediction, and cell measurement based on the complete value of the satellite parameter.

When the satellite parameter is the orbit parameter, the terminal determines position information of the satellite based on the complete value of the orbit parameter, calculates a round-trip time delay or a one-trip time delay based on position information of the terminal and the position information of the satellite, and determines a time offset compensation value of uplink communication, that is, a timing advance, to implement uplink synchronization.

When the satellite parameter is the beam parameter, the terminal determines coverage of a current serving beam or a cell and coverage of a neighboring beam or a neighboring cell based on the complete value of the beam parameter, to complete neighboring cell prediction.

In the embodiment shown in FIG. 4, the first satellite information sent by the network device to the terminal includes the floating-point value of the satellite parameter, and the terminal determines the complete satellite parameter based on the reference value and the floating-point value of the satellite parameter, for communication. Compared with a manner in which the complete satellite parameter is directly delivered, a manner in which the satellite parameter that needs to be indicated by using information is limited to a specific range, and the satellite parameter is represented as a fixed reference value and a changed floating-point value can reduce signaling overheads and improve indication precision.

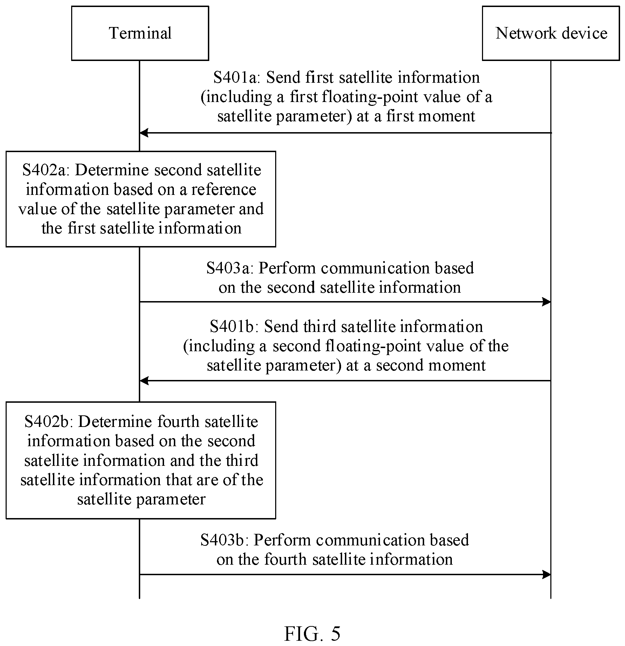

In the foregoing embodiment, the satellite information delivered by the network device to the terminal is the floating-point value relative to the reference value of the satellite parameter. In another embodiment provided in this application, when a difference between a satellite parameter delivered at a current moment and a satellite parameter delivered at a previous moment is small, the satellite information delivered by the network device to the terminal may be a change amount relative to the satellite parameter delivered at the previous moment. This method can further reduce signaling overheads. FIG. 5 shows another wireless communication method according to an embodiment of this application.

S401a: A network device sends first satellite information at a first moment, and correspondingly, a terminal receives the first satellite information sent by the network device at the first moment.

The first satellite information includes a first floating-point value of a satellite parameter. The first floating-point value of the satellite parameter is a difference between an actual value of the satellite parameter and a reference value of the satellite parameter. The satellite parameter includes an orbit parameter and/or a beam parameter.

Detailed content in this step is the same as that in S401. Details are not described herein again.

S402a: The terminal determines second satellite information based on the reference value of the satellite parameter and the first satellite information.

The second satellite information is a complete value of the satellite parameter. Specifically, the terminal determines the complete value of the satellite parameter based on the reference value of the satellite parameter and the floating-point value of the satellite parameter included in the first satellite information.

Detailed content in this step is the same as that in S402. Details are not described herein again.

S403a: The terminal performs communication based on the second satellite information.

The second satellite information includes the complete value of the satellite parameter. The terminal implements operations such as uplink synchronization, cell prediction, and cell measurement based on the complete value of the satellite parameter. For detailed steps, refer to S403. Details are not described herein again.

S401b: The network device sends third satellite information at a second moment, and correspondingly, the terminal receives the third satellite information sent by the network device at the second moment.

The third satellite information includes a second floating-point value of the satellite parameter. The second floating-point value of the satellite parameter is a change amount of an actual value of the satellite parameter at the second moment relative to the actual value of the satellite parameter at the first moment. When reference values of the satellite parameter at the first moment and the second moment do not change, the second floating-point value may also be a change amount of the actual value of the satellite parameter at the second moment relative to the floating-point value of the reference value and relative to the first floating-point value of the satellite parameter.

S402b: The terminal determines fourth satellite information based on the second satellite information and the third satellite information.

The fourth satellite information is a complete value of the satellite parameter of the satellite at the second moment. Specifically, the terminal determines the complete value of the satellite parameter of the satellite at the second moment based on the complete value of the satellite parameter of the satellite at the first moment and the second floating-point value.

In a possible implementation, after determining the second satellite information in S402a, the terminal stores the second satellite information. After receiving the third satellite information sent by the network device at the second moment, the terminal determines the fourth satellite information based on the second satellite information and the third satellite information.

In another possible implementation, after determining the second satellite information in S402a, the terminal stores the first floating-point value. After receiving the third satellite information sent by the network device at the second moment, the terminal determines the fourth satellite information based on the reference value of the satellite parameter, the first floating-point value of the satellite parameter, and the second floating-point value in the third satellite information.

S403b: The terminal performs communication based on the fourth satellite information.

The second satellite information includes the complete value of the satellite parameter of the satellite at the second moment. The terminal implements operations such as uplink synchronization, cell prediction, and cell measurement based on the complete value of the satellite parameter. For details, refer to S403. Details are not described herein again.

It should be noted that steps S401b to S403b are also applicable to a case in which the network device sends the complete value of the satellite parameter at the first moment, that is, the first satellite information in S401a includes the complete value of the satellite parameter, and the terminal directly communicates with the network device based on the complete value of the position parameter.

Floating-point values of the satellite parameter included in the satellite information obtained by the terminal in S401a and S401b are different. To obtain the correct complete value of the satellite parameter, whether the satellite information obtained by the terminal is the first floating-point value of the satellite parameter, the second floating-point value of the satellite parameter, or the complete value of the satellite parameter needs to be determined.

In a possible implementation, the terminal further obtains second indication information, where the second indication information indicates an indication manner of the satellite parameter. In other words, the second indication information indicates content included in satellite information (for example, the first satellite information and the third satellite information) delivered by the network device. Optionally, the satellite information delivered by the network device is the first floating-point value of the satellite parameter, the second floating-point value of the satellite parameter, or the complete value of the satellite parameter. Optionally, the second indication information can be sent to the terminal by using RRC signaling, for example, carried in a system message.

In another possible implementation, the indication manner of the satellite parameter can be determined in a manner agreed in a protocol or a standard. For example, the network device sends the first floating-point value of the satellite parameter to the terminal, and after receiving acknowledgment information of the terminal, the network device sends the second floating-point value of the satellite parameter in a next period. Optionally, the acknowledgment information may be implicitly indicated by successfully performing uplink synchronization.

In the embodiment shown in FIG. 5, when delivering the satellite information at the current moment to the terminal, the network device sends the change amount of the satellite parameter at the current moment relative to the satellite parameter at a previous moment. When a difference between the value of the satellite parameter at the previous moment and the value of the satellite parameter at the current moment is small, indication overheads can be also reduced.

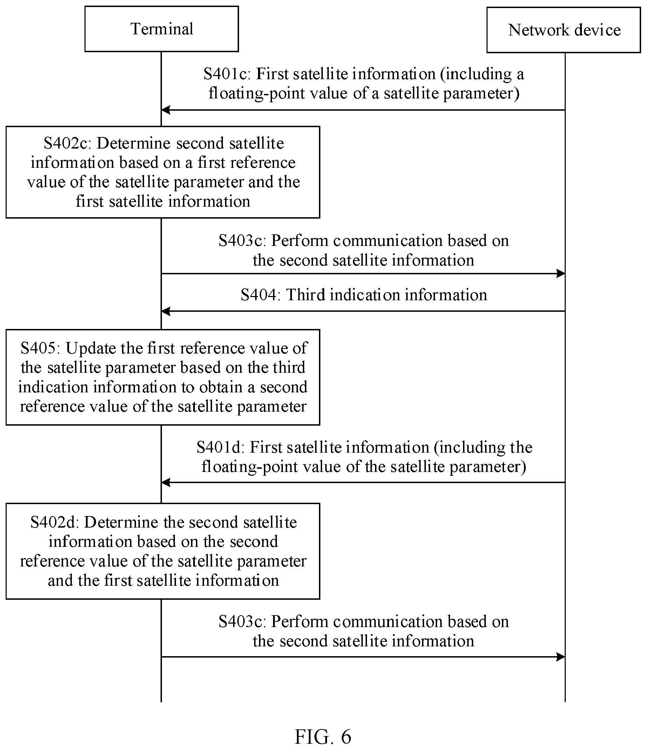

In the foregoing embodiments, the terminal can store the reference value of the satellite parameter, and determine the complete value of the satellite parameter based on the reference value and the received floating-point value of the satellite parameter. As a satellite moves, the reference value of the satellite parameter may be offset. Therefore, the reference value needs to be updated. FIG. 6 is a schematic diagram of interaction of still another wireless communication method according to an embodiment of this application.

S401c: A network device sends first satellite information to a terminal, and correspondingly, the terminal receives the first satellite information sent by the network device.

The first satellite information includes a floating-point value of a satellite parameter. The floating-point value of the satellite parameter is a difference between an actual value of the satellite parameter and a first reference value of the satellite parameter.

S402c: The terminal determines second satellite information based on the first reference value of the satellite parameter and the first satellite information.

S403c: The terminal performs communication based on the second satellite information.

Steps S401c to S403c are the same as steps S401 to S403. Details are not described herein again.

S404: The network device sends third indication information to the terminal, and correspondingly, the terminal receives the third indication information sent by the network device.

The third indication information indicates an update amount of the reference value of the satellite parameter. Specifically, the third indication information includes a change amount of a second reference value of the satellite parameter relative to a first reference value of the satellite parameter, where the first reference value is a reference value of the satellite parameter stored by the terminal device, and the second reference value is an updated reference value of the satellite parameter. Optionally, the network device sends the third indication information to the terminal by using RRC signaling, for example, the third indication information is carried in a system message SIB.

In a possible implementation, the network device periodically updates the reference value of the satellite parameter. For example, a timer is set, and when the timer expires, the third indication information is sent to the terminal.

In another possible implementation, the terminal sends request information to the network device, where the request information is for requesting to update the reference value of the satellite parameter. After receiving the request information sent by the terminal, the network device sends the third indication information to the terminal.

S405: The terminal updates the first reference value of the satellite parameter based on the third indication information to obtain the second reference value of the satellite parameter.

Specifically, the terminal obtains the second reference value based on the first reference value stored in the terminal and the change amount that is of the second reference value of the satellite parameter relative to the first reference value of the satellite parameter and that is included in the third indication information.

S401d: The network device sends first satellite information to the terminal, and correspondingly, the terminal receives the first satellite information sent by the network device.

The first satellite information includes a floating-point value of the satellite parameter, and the floating-point value of the satellite parameter is a difference between the actual value of the satellite parameter and the second reference value of the satellite parameter.

S402d: The terminal determines second satellite information based on the second reference value of the satellite parameter and the first satellite information.

The second satellite information is a complete value of the satellite parameter. Specifically, the terminal determines the complete value of the satellite parameter based on the second reference value of the satellite parameter and the floating-point value of the satellite parameter included in the first satellite information.

S403d: The terminal performs communication based on the second satellite information.

This step is the same as S403. Details are not described herein again.

It should be noted that a sequence of step S405 and step S401d is not limited in this application. In a possible implementation, steps S404 and S401d may be one step, and steps S405 and S402d may be one step. That is, the third indication information and the first satellite information are carried in a broadcast signal. Optionally, the third indication information and the first satellite information are included in different system information. After receiving the broadcast signal, the terminal determines the second satellite information based on the first reference value of the satellite parameter, the third indication information, and the first satellite information.

As a satellite moves, the reference value of the satellite parameter may be offset. When the floating-point value of the satellite parameter is limited, the complete value of the satellite parameter calculated by the terminal based on the reference value and the floating-point value may be no longer accurate. In the embodiment shown in FIG. 6, the third indication information indicates the update amount of the reference value of the satellite parameter, and the reference value of the satellite parameter stored in the terminal is updated, to ensure accuracy of the complete value of the satellite parameter obtained by the terminal. In addition, compared with a manner of re-delivering a new reference value, a manner of sending the update amount of the reference value can reduce signaling overheads.

The following provides an example of the wireless communication method provided in embodiments of this application when the satellite parameter is an orbit parameter or a beam parameter.

A satellite usually operates in a fixed orbit. When the orbit of the satellite is fixed, the orbit parameter of the satellite fluctuates in a specific range. Therefore, when delivering the orbit parameter, the satellite sets a reference value to limit the orbit parameter to a specific range, and indicates, by using a floating-point value, fluctuation based on the reference value, so as to improve indication precision, and reduce signaling overheads.

An orbital semi-major axis included in the orbit parameter is used as an example for description below. It should be noted that other orbit parameters also adopt a similar manner. Details are not described herein again.

For example, if a value range of the orbital semi-major axis in the satellite orbit parameter is 500-501 km, the reference value can be set to 500 km, and the floating-point value is 0-1 km; if a value range of the orbital semi-major axis in the satellite orbit parameter is 550-551 km, the reference value can be set to 550 km, and the floating-point value is 0-1 km; if a value range of the orbital semi-major axis in the satellite orbit parameter is 600-602 km, the reference value can be set to 600 km, and the floating-point value is 0-2 km; or if a value range of the orbital semi-major axis of the satellite orbit is 700-702 km, the reference value can be set to 700 km, and the floating-point value can be set to 0-2 km.

In a possible implementation, a terminal stores reference values of orbital semi-major axes of different satellites. Specifically, the terminal stores a mapping relationship between index information and a reference value of the orbital semi-major axis, for example, a mapping table shown in Table 1. Index information 1, 2, 3, and 4 may also be represented by 00, 01, 10, and 11 in binary.

**Table 1**

| Index information | Reference value of the orbital semi-major axis |
|---|---|
| 1 | 500 km |
| 2 | 550 km |
| 3 | 600 km |
| 4 | 700 km |

In a possible implementation, the terminal may further store a mapping relationship between index information and a value range of the orbital semi-major axis shown in Table 2. Optionally, when storing the value range, the terminal may use a minimum value, an intermediate value, or a maximum value in the value range as the reference value by default. Optionally, when the terminal stores the value range, a network device indicates, by using fourth indication information, that the reference value is the minimum value, the intermediate value, or the maximum value in the value range. The fourth indication information may include 1 bit or 2 bits indicating a relationship between a reference value of the orbital semi-major axis and a value range of the orbital semi-major axis.

**Table 2**

| Index information | Value range of the orbital semi-major axis |
|---|---|
| 1 | 500-501 km |
| 2 | 550-551 km |
| 3 | 600-602 km |
| 4 | 700-702 km |

The index information in Table 1 and Table 2 may be a satellite identifier, an orbit identifier, or a specific index value. When the index information is the specific index value, the network device delivers the first indication information to the terminal, where the first indication information includes the index value. Optionally, the first indication information further indicates the reference value as a value (a minimum value, an intermediate value, or a maximum value) in a value range. When the index information is the satellite identifier or the orbit identifier, the network device does not need to deliver first indication information to the terminal, and the terminal can obtain the satellite identifier or the orbit identifier of the satellite.

For example, a value of an orbital semi-major axis of a satellite is 550.2 km. The network device sends first satellite information to the terminal. The first satellite information includes a floating-point value of the satellite parameter. For example, the first satellite information includes a floating-point value 200 m of the orbital semi-major axis. After receiving the first satellite information, the terminal determines a complete value of the orbital semi-major axis based on the reference value of the orbital semi-major axis and the floating-point value of the orbital semi-major axis.

In a possible implementation, the terminal determines, based on the satellite identifier (or the orbit identifier) and Table 1, that the reference value of the orbital semi-major axis of the satellite is 550 km; or the terminal receives first indication information sent by the network device, where the first indication information occupies 2 bits, and a value of the first indication information is 01; and the terminal determines, based on the first indication information, that the reference value of the orbital semi-major axis of the satellite is 550 km. The terminal determines, based on the reference value 550 km of the orbital semi-major axis of the satellite and the floating-point value 200 m of the semi-major axis, that the actual value of the orbital semi-major axis of the satellite is 550.2 km. It should be noted that a quantity unit representing the reference value and the floating-point value is not limited in this application.

In another possible implementation, the terminal determines, based on the satellite identifier (or the orbit identifier) and Table 2, that a value range of the orbital semi-major axis of the satellite is 550-551 km, and determines, based on default information, that a reference value of the orbital semi-major axis is 550 km; or the terminal receives the first indication information sent by the network device, determines, based on the first indication information, that a value range of a reference value of the orbital semi-major axis of the satellite is 550-551 km, and determines, based on the default information or the fourth indication information, that a reference value of the orbital semi-major axis is 550 km. The terminal determines, based on the reference value 550 km of the orbital semi-major axis of the satellite and the floating-point value 200 m of the semi-major axis, that the actual value of the orbital semi-major axis of the satellite is 550.2 km.

An azimuth (hereinafter referred to as a beam azimuth) of a beam pointing axis relative to a satellite motion direction included in the beam parameter is used as an example for description below. It should be noted that other beam parameters also adopt a similar manner. Details are not described herein.

For example, if a value range of the beam azimuth is 28-29 degrees, the reference value can be set to 28 degrees, and the floating-point value can be set to 0-1 degrees; if a value range of the beam azimuth is 30-31 degrees, the reference value can be set to 30 degrees, and the floating-point value can be set to 0-1 degrees; if a value range of the beam azimuth is 33-35 degrees, the reference value can be set to 33 degrees, and the floating-point value can be set to 0-2 degrees; or if a value range of the beam azimuth is 38-40 degrees, the reference value can be set to 38 degrees, and the floating-point value can be set to 0-2 degrees.

In a possible implementation, a terminal stores reference values of beam azimuths of different satellites. Specifically, the terminal stores a mapping relationship between index information and a reference value of the beam azimuth, for example, a mapping table shown in Table 3. Index information 1, 2, 3, and 4 may also be represented by 00, 01, 10, and 11 in binary.

**Table 3**

| Index information | Azimuth of the beam pointing axis relative to the satellite motion direction |
| --- | --- |
| 1 | 28 degrees |
| 2 | 30 degrees |
| 3 | 33 degrees |
| 4 | 38 degrees |

In a possible implementation, the terminal may further store a mapping relationship between index information and a value range of the beam azimuth shown in Table 2. When storing the value range, the terminal may use a minimum value, an intermediate value, or a maximum value in the value range as the reference value by default; or indicate, based on fourth indication information, that the reference value is a minimum value, a maximum value, or an intermediate value in the value range. The fourth indication information may include 1 bit or 2 bits indicating a relationship between a reference value of the beam azimuth and a value range of the beam azimuth.

**Table 4**

| Index information | Azimuth of the beam pointing axis relative to the satellite motion direction |
| --- | --- |
| 1 | 28-29 degrees |
| 2 | 30-31 degrees |
| 3 | 33-35 degrees |
| 4 | 38-40 degrees |

The index information in Table 3 and Table 4 may be a satellite identifier, an orbit identifier, or a specific index value. When the index information is the specific index value, a network device delivers first indication information to the terminal, where the first indication information includes the index value. When the index information is the satellite identifier or the orbit identifier, the network device does not need to deliver first indication information to the terminal, and the terminal can obtain the satellite identifier or the orbit identifier of the satellite.

For example, a beam azimuth value of a satellite is 33.9 degrees. The network device sends first satellite information to the terminal. The first satellite information includes a floating-point value of the satellite parameter. For example, the first satellite information includes a floating-point value 0.9 degrees of the beam azimuth or a floating-point value -0.1 degrees of the beam azimuth. After receiving the first satellite information, the terminal determines a complete value of the orbital semi-major axis based on the reference value of the beam azimuth and the floating-point value of the beam azimuth.

In a possible implementation, the terminal determines, based on the satellite identifier (or the orbit identifier) and Table 3, that the reference value of the beam azimuth of the satellite is 33 degrees. Alternatively, the terminal receives the first indication information sent by the network device, where the first indication information indicates that the index value is 3 (or 10 in binary), and the terminal determines, based on the first indication information, that the reference value of the beam azimuth of the satellite is 33 degrees. The terminal determines, based on the reference value 33 degrees of the beam azimuth of the satellite and the floating-point value 0.9 degrees of the beam azimuth of the satellite, that the actual value of the beam azimuth of the satellite is 33.9 degrees.

In another possible implementation, the terminal determines, based on the satellite identifier (or the orbit identifier) and Table 4, that a value range of the beam azimuth of the satellite is 33-35 degrees, and determines, based on default information, that a reference value of the beam azimuth is 34 degrees; or the terminal receives the first indication information sent by the network device, where the first indication information indicates that the index value is 3 (or 10 in binary), and the terminal determines, based on the first indication information, that a value range of the beam azimuth of the satellite is 33-35 degrees, and determines, based on the default information or the fourth indication information, that the reference value of the beam azimuth of the satellite is 34 degrees. The terminal determines, based on the reference value 34 degrees of the beam azimuth of the satellite and the floating-point value of the semi-major axis -0.1 degrees, that the actual value of the beam azimuth of the satellite is 33.9 degrees.

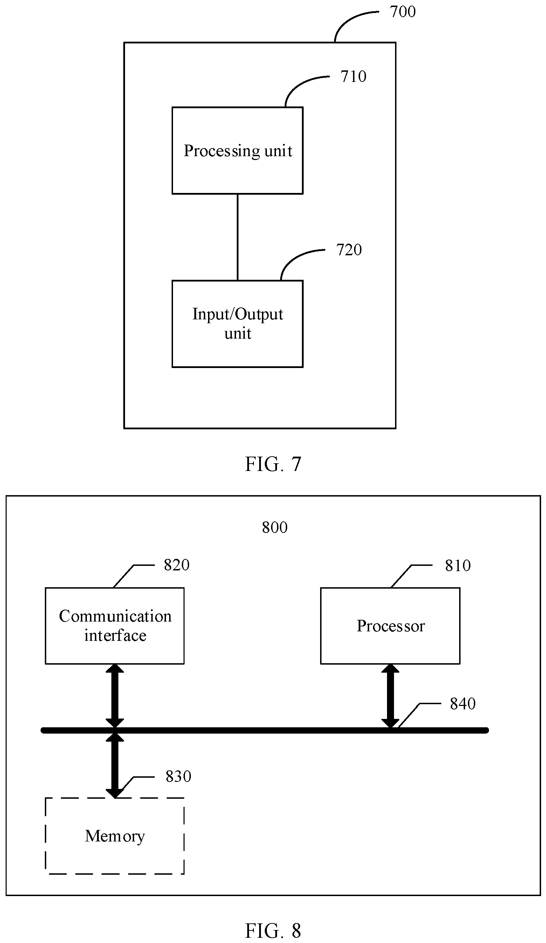

As shown in FIG. 7, based on a same technical concept, an embodiment of this application further provides a communication apparatus 700. The communication apparatus 700 may be a terminal or a network device, that is, a first communication apparatus or a second communication apparatus, or may be an apparatus in a terminal device or a network device, or may be an apparatus that can be used together with a terminal device and a network device. In a possible implementation, the communication apparatus 700 may include modules or units that are in one-to-one correspondence with the methods/operations/steps/actions performed by the terminal in the foregoing method embodiments. The units may be a hardware circuit, software, or a combination of a hardware circuit and software. In a possible implementation, the communication apparatus 700 may include a processing unit 710 and an input/output unit 720. The processing unit 710 may be configured to invoke the input/output unit 720 to perform a receiving and/or output function.

When the communication apparatus 700 is configured to perform an operation performed by the terminal, that is, the first communication apparatus, the input/output unit 720 is configured to receive first satellite information from the second communication apparatus, where the first satellite information includes a floating-point value of a satellite parameter. The processing unit 710 is configured to determine second satellite information based on a reference value of the satellite parameter and the first satellite information. The input/output unit 720 is further configured to communicate with the second communication apparatus based on the second satellite information.

In a possible implementation, the processing unit 710 is further configured to obtain the reference value of the satellite parameter based on a satellite identifier.

In a possible implementation, the input/output unit 720 is further configured to receive first indication information, where the first indication information is used to obtain the reference value of the satellite parameter.

In a possible implementation, the input/output unit 720 is specifically configured to receive the first satellite information sent by the second communication apparatus at a first moment, where the first satellite information includes a first floating-point value of the satellite parameter; and is further configured to receive the first satellite information sent by the second communication apparatus at a second moment, where the first satellite information includes a second floating-point value of the satellite parameter, and the second floating-point value is a value relative to the first floating-point value.

In a possible implementation, the input/output unit 720 is further configured to receive second indication information, where the second indication information includes an indication manner of the satellite parameter.

In a possible implementation, the input/output unit 720 is further configured to receive third indication information, where the third indication information indicates an update amount of the reference value of the satellite parameter; and the processing unit 710 is further configured to update the reference value of the satellite parameter based on the third indication information.

When the communication apparatus 700 is configured to perform an operation performed by the network device, that is, the second communication apparatus, the processing unit 710 is configured to determine first satellite information, where the first satellite information includes a floating-point value of a satellite parameter. The input/output unit 720 is configured to output the first satellite information, where the first satellite information and a reference value of the satellite parameter are used to obtain second satellite information.

In a possible implementation, the input/output unit 720 is further configured to output first indication information, where the first indication information is used to obtain the reference value of the satellite parameter.

In a possible implementation, the input/output unit 720 is specifically configured to output the first satellite information at a first moment, where the first satellite information includes a first floating-point value of the satellite parameter; and the input/output unit is specifically configured to output the first satellite information at a second moment, where the first satellite information includes a second floating-point value of the satellite parameter, and the second floating-point value is a value relative to the first floating-point value.

In a possible implementation, the input/output unit 720 is configured to receive second indication information, where the second indication information includes an indication manner of the satellite parameter.

In a possible implementation, the input/output unit 720 is further configured to output third indication information, where the third indication information indicates an update amount of the reference value of the satellite parameter.

The input/output unit 720 may be also configured to perform other receiving or sending steps or operations performed by the terminal and the network device in the foregoing method embodiments. The processing unit 710 may be also configured to perform corresponding steps or operations, other than receiving and sending, performed by the terminal and the network device in the foregoing method embodiments. Details are not described herein again.

In embodiments of this application, division into modules is an example, and is merely a logical function division. During actual implementation, there may be another division manner. In addition, functional modules or units in embodiments of this application may be integrated into one processor, or may exist alone physically, or two or more modules or units may be integrated into one module or unit. The integrated module or unit may be implemented in a form of hardware, or may be implemented in a form of a software functional module.

As shown in FIG. 8, an embodiment of this application further provides a communication apparatus 800, configured to implement functions of the terminal and the network device in the foregoing method, that is, functions of the first communication apparatus and the second communication apparatus. The communication apparatus may be a terminal or a network device, may be an apparatus in a terminal or a network device, or may be an apparatus that can be used together with a terminal or a network device. The communication apparatus 800 may be a chip system. In this embodiment of this application, the chip system may include a chip, or may include a chip and another discrete device. The communication apparatus 800 includes at least one processor 810, configured to implement functions of the terminal and the network device in the method provided in embodiments of this application. The communication apparatus 800 may further include a communication interface 820. In this embodiment of this application, the communication interface may be a transceiver, a circuit, a bus, a module, or another type of communication interface, and is configured to communicate with another device through a transmission medium. For example, the communication interface 820 is used by an apparatus in the communication apparatus 800 to communicate with another device.

The processor 810 may perform a function performed by the processing unit 710 in the communication apparatus 700, and the communication interface 820 may be configured to perform a function performed by the input/output unit 720 in the communication apparatus 700.

When the communication apparatus 800 is configured to perform an operation performed by the terminal, the communication interface 820 is configured to receive first satellite information from a second communication apparatus, where the first satellite information includes a floating-point value of a satellite parameter. The processor 810 is configured to determine second satellite information based on a reference value of the satellite parameter and the first satellite information. The communication interface 820 is further configured to communicate with the second communication apparatus based on the second satellite information.

When the communication apparatus 800 is configured to perform an operation performed by the network device, the processor 810 is configured to determine first satellite information, where the first satellite information includes a floating-point value of a satellite parameter. The communication interface 820 is configured to output the first satellite information, where the first satellite information and a reference value of the satellite parameter are used to obtain second satellite information.

The communication interface 820 is further configured to perform other receiving or sending steps or operations performed by the terminal and the network device in the foregoing method embodiments. The processor 810 may be also configured to perform corresponding steps or operations, other than receiving and sending, performed by the terminal and the network device in the foregoing method embodiments. Details are not described herein again.

The communication apparatus 800 may further include at least one memory 830, configured to store program instructions and/or data. The memory 830 is coupled to the processor 810. The coupling in this embodiment of this application is an indirect coupling or a communication connection between apparatuses, units, or modules, may be in an electrical, a mechanical, or another form, and is used for information exchange between the apparatuses, the units, or the modules. The processor 820 may cooperate with the memory 830. The processor 810 may execute the program instructions stored in the memory 830. In a possible implementation, at least one of the at least one memory may be integrated with the processor. In another possible implementation, the memory 830 is located outside the communication apparatus 800.

In this embodiment of this application, a specific connection medium between the communication interface 820, the processor 810, and the memory 830 is not limited. In this embodiment of this application, in FIG. 8, the memory 830, the processor 810, and the communication interface 820 are connected through a bus 840. The bus is represented by using a thick line in FIG. 8. A connection manner between other components is only schematically described, and is not limited herein. The bus may be classified into an address bus, a data bus, a control bus, and the like. For ease of representation, only one thick line is used to represent the bus in FIG. 8, but this does not mean that there is only one bus or only one type of bus.

In this embodiment of this application, the processor 810 may be one or more central processing units (Central Processing Units, CPUs). When the processor 810 is one CPU, the CPU may be a single-core CPU, or may be a multi-core CPU. The processor 810 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware and software modules in the processor.

In this embodiment of this application, the memory 830 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

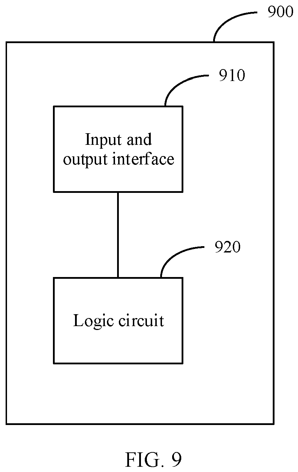

As shown in FIG. 9, an embodiment of this application further provides an apparatus 900, configured to implement functions of the terminal and the network device in the foregoing method. The apparatus 900 may be a communication apparatus or a chip in a communication apparatus. The communication apparatus includes: at least one input/output interface 910 and a logic circuit 920. The input/output interface 910 may be an input and output circuit, or may be referred to as a communication interface. The logic circuit 920 may be a signal processor, a chip, or another integrated circuit that can implement the method in this application. The at least one input/output interface 910 is configured to input or output a signal or data. The input/output interface 910 may implement functions implemented by the input/output unit 720 in the apparatus 700 and the communication interface 820 in the apparatus 800. The logic circuit 920 is configured to perform some or all steps of any method provided in embodiments of this application. The logic circuit may implement functions implemented by the processing unit 710 in the apparatus 700 and the processor 810 in the apparatus 800.

For example, when the apparatus is a terminal or is used for a terminal, the apparatus is configured to perform the steps performed by the terminal (a first communication apparatus) in the possible implementations in the foregoing method embodiments. For example, the input/output interface 910 is specifically configured to receive first satellite information, the logic circuit 920 is configured to perform the method in the possible implementation in the foregoing method embodiment, and obtain second satellite information based on the first satellite information; and the input/output interface 910 is further configured to communicate with a second communication apparatus based on the second satellite information.

For example, when the apparatus is a network device or is used for a network device, the apparatus is configured to perform the steps performed by the network device (a second communication apparatus) in the possible implementations in the foregoing method embodiments. For example, the logic circuit 920 is configured to perform various possible implementations in the foregoing method embodiments to determine the first satellite information. The input/output interface 910 is configured to output the first satellite information.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a network device to the terminal; or the chip in the terminal sends information to another module (for example, a radio frequency module or an antenna) in the terminal, where the information is sent by the terminal to a network device.

When the communication apparatus is a chip used in a network device, the chip in the network device implements functions of the network device in the foregoing method embodiments. The chip in the network device receives information from another module (for example, a radio frequency module or an antenna) in the network device, where the information is sent by a terminal to the network device; or the chip in the network device sends information to another module (for example, a radio frequency module or an antenna) in the network device, where the information is sent by the network device to a terminal.

Based on a same concept as the foregoing method embodiments, an embodiment of this application further provides a computer-readable storage medium. The computer-readable storage medium stores a computer program. The computer program is executed by hardware (for example, a processor), to implement some or all of the steps in any one of the methods performed by any apparatus in embodiments of this application.

Based on a same concept as the foregoing method embodiments, an embodiment of this application further provides a computer program product including program instructions. When the computer program product runs on a computer, the computer is enabled to perform some or all of the steps in any one of the methods in the foregoing aspects.

Based on a same concept as the foregoing method embodiments, this application further provides a chip or a chip system. The chip may include a processor. The chip may further include a memory (or a storage module) and/or a transceiver (or a communication module), or the chip is coupled to the memory (or the storage module) and/or a transceiver (or a communication module). The transceiver (or the communication module) may be configured to support the chip in wired and/or wireless communication, and the memory (or the storage module) may be configured to store a program. The processor invokes the program to implement an operation performed by the terminal or the network device in any one of the foregoing method embodiments or the possible implementations of the method embodiments. The chip system may include the chip, or may include the chip and another discrete component, such as a memory (or a storage module) and/or a transceiver (or a communication module).

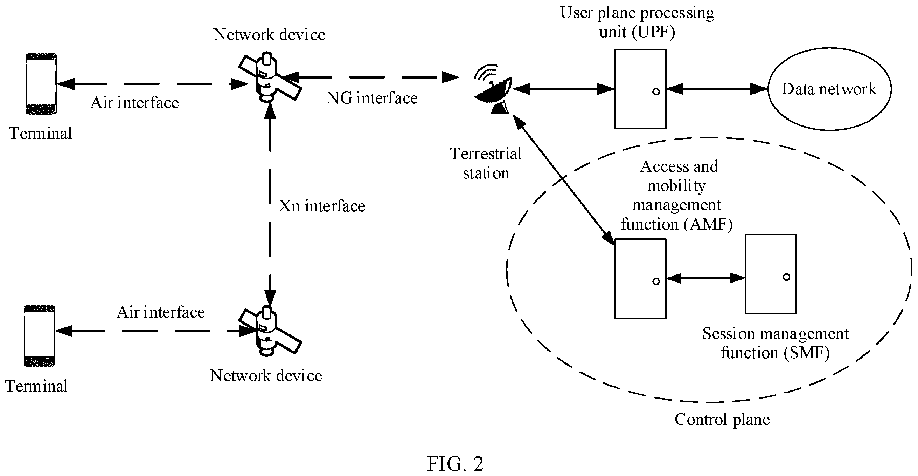

Based on a same concept as the foregoing method embodiment, this application further provides a communication system. The communication system may include the foregoing terminal and/or the foregoing network device. The communication system may be configured to implement an operation performed by the terminal or the network device in any one of the foregoing method embodiments and the possible implementations of the method embodiments. For example, the communication system may have a structure shown in FIG. 1 or FIG. 2.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, the description of each embodiment has respective focuses. For a part that is not described in detail in an embodiment, refer to related descriptions in other embodiments.

In the foregoing embodiments, the description of each embodiment has respective focuses. For a part that is not described in detail in an embodiment, refer to related descriptions in other embodiments.

In the several embodiments provided in this application, it should be understood that the disclosed apparatus may be implemented in other manners. For example, the described apparatus embodiment is merely an example. For example, division into the units is merely logical function division and may be other division in actual implementation.

For example, a plurality of units or components may be combined or integrated into another system, or some features may be ignored or not performed. The displayed or discussed mutual indirect couplings or direct couplings or communication connections may be implemented through some interfaces. The indirect couplings or communication connections between the apparatuses or units may be implemented in electronic or other forms.

The foregoing description is merely some specific implementations of this application, but is not intended to limit the protection scope of this application. Any person skilled in the art may make changes and modifications to these embodiments within the technical scope disclosed in this application. Therefore, the following claims are intended to be construed as to cover the foregoing embodiments and to indicate changes and modifications falling within the scope of this application. Therefore, the protection scope of this application shall be subject to the protection scope of the claims.

**Claims**

1. A wireless communication method, comprising:

   receiving, by a first communication apparatus, first satellite information from a second communication apparatus, wherein the first satellite information comprises a floating-point value of a satellite parameter;
   determining second satellite information based on a reference value of the satellite parameter and the first satellite information; and
   communicating with the second communication apparatus based on the second satellite information.

2. The method according to claim 1, further comprising:
   obtaining, by the first communication apparatus, the reference value of the satellite parameter based on a satellite identifier.

3. The method according to claim 1 or 2, further comprising:
   receiving, by the first communication apparatus, first indication information, wherein the first indication information indicates the reference value of the satellite parameter.

4. The method according to claim 3, wherein

   the first indication information comprises first index information, and the first communication apparatus obtains the reference value of the satellite parameter based on the first index information; or
   the first indication information comprises the reference value of the satellite parameter.

5. The method according to claim 3 or 4, wherein
   the first satellite information is carried in a first system message, the first indication information is carried in a second system message, and a delivery period of the first system message is different from a delivery period of the second system message.

6. The method according to any one of claims 1 to 5, wherein the receiving, by a first communication apparatus, first satellite information from a second communication apparatus comprises:

   receiving, by the first communication apparatus, the first satellite information sent by the second communication apparatus at a first moment, wherein the first satellite information comprises a first floating-point value of the satellite parameter; and
   receiving, by the first communication apparatus, the first satellite information sent by the second communication apparatus at a second moment, wherein the first satellite information comprises a second floating-point value of the satellite parameter, and
   the second floating-point value is a value relative to the first floating-point value.

7. The method according to claim 6, further comprising:
   receiving, by the first communication apparatus, second indication information, wherein the second indication information comprises an indication manner of the satellite parameter.

8. The method according to any one of claims 1 to 7, wherein
   the satellite parameter comprises an orbit parameter, and the orbit parameter comprises one or more of the following parameters: orbital semi-major axis information, an orbital plane inclination angle at reference time, an eccentricity, an argument of perigee, a longitude of ascending node of orbit plane, and a mean anomaly at reference time.

9. The method according to any one of claims 1 to 8, wherein
the satellite parameter comprises a beam parameter, wherein the beam parameter comprises an azimuth and/or a pitch angle of a beam pointing axis relative to a satellite motion direction.

10. The method according to any one of claims 1 to 9, further comprising:

receiving, by the first communication apparatus, third indication information, wherein the third indication information indicates an update amount of the reference value of the satellite parameter; and
updating, by the first communication apparatus, the reference value of the satellite parameter based on the third indication information.

11. A wireless communication method, further comprising:

determining, by a second communication apparatus, first satellite information, wherein the first satellite information comprises a floating-point value of a satellite parameter; and
sending, by the second communication apparatus, the first satellite information to a first communication apparatus, wherein the first satellite information and a reference value of the satellite parameter are used to obtain second satellite information.

12. The method according to claim 11, further comprising:
sending, by the second communication apparatus, first indication information to the first communication apparatus, wherein the first indication information is used by the first communication apparatus to obtain the reference value of the satellite parameter.

13. The method according to claim 11, wherein

the first indication information comprises first index information; or
the first indication information comprises the reference value of the satellite parameter.

14. The method according to claim 12 or 13, wherein
the first satellite information is carried in a first system message, the first indication information is carried in a second system message, and a sending period of the first system message is different from a sending period of the second system message.

15. The method according to any one of claims 11 to 14, wherein the sending, by the second communication apparatus, the first satellite information to a first communication apparatus comprises:

sending, by the second communication apparatus, the first satellite information at a first moment, wherein the first satellite information comprises a first floating-point value of the satellite parameter; and
sending, by the second communication apparatus, the first satellite information at a second moment, wherein the first satellite information comprises a second floating-point value of the satellite parameter, and the second floating-point value is a value relative to the first floating-point value.

16. The method according to claim 15, further comprising:
receiving, by the first communication apparatus, second indication information, wherein the second indication information comprises an indication manner of the satellite parameter.

17. The method according to any one of claims 11 to 16, wherein
the satellite parameter comprises an orbit parameter, and the orbit parameter comprises one or more of the following parameters: orbital semi-major axis information, an orbital plane inclination angle at reference time, an eccentricity, an argument of perigee, a longitude of ascending node of orbit plane, and a mean anomaly at reference time.

18. The method according to any one of claims 11 to 17, wherein
the satellite parameter comprises a beam parameter, wherein the beam parameter comprises an azimuth and/or a pitch angle of a beam pointing axis relative to a satellite motion direction.

**19.** The method according to any one of claims 11 to 18, wherein
sending, by the second communication apparatus, third indication information, wherein the third indication information indicates an update amount of the reference value of the satellite parameter.

**20.** A communication apparatus, comprising:

an input/output unit, configured to receive first satellite information from a second communication apparatus, wherein the first satellite information comprises a floating-point value of a satellite parameter; and
a processing unit, configured to determine second satellite information based on a reference value of the satellite parameter and the first satellite information, wherein
the input/output unit is further configured to communicate with the second communication apparatus based on the second satellite information.

**21.** The apparatus according to claim 20, wherein
the processing unit is further configured to obtain the reference value of the satellite parameter based on a satellite identifier.

**22.** The apparatus according to claim 20 or 21, further comprising:
the input/output unit is further configured to receive first indication information, wherein the first indication information is used to obtain the reference value of the satellite parameter.

**23.** The apparatus according to claim 23, wherein

the first indication information comprises first index information, and the processing unit is configured to obtain the reference value of the satellite parameter based on the first index information; or
the first indication information comprises the reference value of the satellite parameter.

**24.** The apparatus according to any one of claims 20 to 23, wherein that an input/output unit is configured to receive first satellite information from a second communication apparatus comprises:

the input/output unit is specifically configured to receive the first satellite information sent by the second communication apparatus at a first moment, wherein the first satellite information comprises a first floating-point value of the satellite parameter; and
the input/output unit is further configured to receive the first satellite information sent by the second communication apparatus at a second moment, wherein the first satellite information comprises a second floating-point value of the satellite parameter, and
the second floating-point value is a value relative to the first floating-point value.

**25.** The apparatus according to claim 24, wherein
the input/output unit is further configured to receive second indication information, wherein the second indication information comprises an indication manner of the satellite parameter.

**26.** The apparatus according to any one of claims 20 to 25, wherein
the satellite parameter comprises an orbit parameter, and the orbit parameter comprises one or more of the following parameters: orbital semi-major axis information, an orbital plane inclination angle at reference time, an eccentricity, an argument of perigee, a longitude of ascending node of orbit plane, and a mean anomaly at reference time.

**27.** The apparatus according to any one of claims 20 to 26, wherein
the satellite parameter comprises a beam parameter, wherein the beam parameter comprises an azimuth and/or a pitch angle of a beam pointing axis relative to a satellite motion direction.

**28.** The apparatus according to any one of claims 20 to 27, wherein

the input/output unit is further configured to receive third indication information, wherein the third indication information indicates an update amount of the reference value of the satellite parameter; and
the processing unit is further configured to update the reference value of the satellite parameter based on the third indication information.

29. A communication apparatus, comprising:

   a processing unit, configured to determine first satellite information, wherein the first satellite information comprises a floating-point value of a satellite parameter; and
   an input/output unit, configured to output the first satellite information, wherein the first satellite information and a reference value of the satellite parameter are used to obtain second satellite information.

30. The apparatus according to claim 29, wherein
   the input/output unit is further configured to output first indication information, wherein the first indication information is used to obtain the reference value of the satellite parameter.

31. The apparatus according to claim 30, wherein

   the first indication information comprises first index information; or
   the first indication information comprises the reference value of the satellite parameter.

32. The apparatus according to claim 30 or 31, wherein
   the first satellite information is carried in a first system message, the first indication information is carried in a second system message, and a sending period of the first system message is different from a sending period of the second system message.

33. The apparatus according to any one of claims 29 to 32, wherein that an input/output unit is configured to output the first satellite information comprises:

   the input/output unit is specifically configured to output the first satellite information at a first moment, wherein the first satellite information comprises a first floating-point value of the satellite parameter; and
   the input/output unit is specifically configured to output the first satellite information at a second moment, wherein the first satellite information comprises a second floating-point value of the satellite parameter, and the second floating-point value is a value relative to the first floating-point value.

34. The apparatus according to claim 33, further comprising:
   the input/output unit is configured to receive second indication information, wherein the second indication information comprises an indication manner of the satellite parameter.

35. The apparatus according to any one of claims 29 to 34, wherein
   the satellite parameter comprises an orbit parameter, and the orbit parameter comprises one or more of the following parameters: orbital semi-major axis information, an orbital plane inclination angle at reference time, an eccentricity, an argument of perigee, a longitude of ascending node of orbit plane, and a mean anomaly at reference time.

36. The apparatus according to any one of claims 29 to 35, wherein
   the satellite parameter comprises a beam parameter, wherein the beam parameter comprises an azimuth and/or a pitch angle of a beam pointing axis relative to a satellite motion direction.

37. The apparatus according to any one of claims 29 to 36, further comprising:
   the input/output unit is further configured to output third indication information, wherein the third indication information indicates an update amount of the reference value of the satellite parameter.

38. A communication apparatus, comprising a logic circuit and an input/output interface, wherein the input/output interface is configured to receive first satellite information, and the logic circuit is configured to determine second satellite information based on the first satellite information by using the method according to any one of claims 1 to 10.

39. A communication apparatus, comprising a logic circuit and an input/output interface, wherein the logic circuit is configured to determine first satellite information by using the method according to any one of claims 11 to 19, and a communication interface is configured to output the first satellite information.

40. A communication apparatus, comprising a processor configured to execute a computer program or executable instructions stored in a memory, wherein when the computer program or the executable instructions are executed, the communication apparatus is enabled to implement the method according to any one of claims 1 to 9, or the communication apparatus is enabled to implement the method according to any one of claims 11 to 19.

41. The communication apparatus according to claim 40, further comprising the memory, wherein the memory and the processor are integrated together.

42. The communication apparatus according to claim 40 or 41, further comprising a transceiver, wherein the transceiver is configured to receive and send data or signaling.

43. A computer-readable storage medium, comprising program instructions, wherein when the program instructions are run on a computer, the method according to any one of claims 1 to 9 is performed, or the method according to any one of claims 11 to 19 is performed.

44. A computer program product, comprising program instructions, wherein when the program instructions are run on a computer, the method according to any one of claims 1 to 9 is performed, or the method according to any one of claims 11 to 19 is performed.

45. A communication system, comprising the communication apparatus according to any one of claims 20 to 28 and the communication apparatus according to any one of claims 29 to 37.

Satellite 102

Feeder link

Service link

User terminal 101

Terminal 101

Gateway 103

FIG. 1

Network device

Terminal

Air interface

NG interface

Xn interface

Air interface

Terminal

Network device

User plane processing
unit (UPF)

Data network

Terrestrial
station

Access and
mobility
management
function (AMF)

Session management
function (SMF)

Control plane

FIG. 2

FIG. 3

FIG. 4

```
┌──────────────┐                                              ┌──────────────────┐
│   Terminal   │                                              │  Network device  │
└──────┬───────┘                                              └────────┬─────────┘
       │         S401a: Send first satellite information               │
       │        (including a first floating-point value of a           │
       │◄──────── satellite parameter) at a first moment ──────────────│
       │                                                               │
┌──────┴────────────────────────┐                                      │
│ S402a: Determine second       │                                      │
│ satellite information based    │                                      │
│ on a reference value of the    │                                      │
│ satellite parameter and the    │                                      │
│ first satellite information     │                                      │
└──────┬────────────────────────┘                                      │
       │         S403a: Perform communication based                    │
       │─────────── on the second satellite information ──────────────►│
       │                                                               │
       │         S401b: Send third satellite information               │
       │     (including a second floating-point value of the          │
       │◄──────── satellite parameter) at a second moment ─────────────│
       │                                                               │
┌──────┴────────────────────────┐                                      │
│ S402b: Determine fourth       │                                      │
│ satellite information based    │                                      │
│ on the second satellite        │                                      │
│ information and the third      │                                      │
│ satellite information that are  │                                      │
│ of the satellite parameter     │                                      │
└──────┬────────────────────────┘                                      │
       │         S403b: Perform communication based                    │
       │─────────── on the fourth satellite information ──────────────►│
       │                                                               │
```

FIG. 5

FIG. 6

700

710

Processing unit

720

Input/Output
unit

FIG. 7

800

820

Communication
interface

810

Processor

840

830

Memory

FIG. 8

900

910

Input and
output interface

920

Logic circuit

FIG. 9

## INTERNATIONAL SEARCH REPORT

| International application No. |
|---|
| **PCT/CN2021/143991** |

| A. | CLASSIFICATION OF SUBJECT MATTER |
|---|---|
| | H04B 7/185(2006.01)i |

According to International Patent Classification (IPC) or to both national classification and IPC

| B. | FIELDS SEARCHED |
|---|---|

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNPAT; CNKI; WPI; EPODOC; IEEE; 3GPP: 卫星, 基准, 参考, 浮动, 变化, 更新, 指示, 开销, 标识, 索引, NTN, satellite, parameter, reference, reduce, float, update, overhead, consumption, indicate, ID, identifier, index

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111385013 A (HUAWEI TECHNOLOGIES CO., LTD.) 07 July 2020 (2020-07-07) description, paragraphs [0004]-[0025], paragraphs [0035]-[0072], paragraphs [0134]-[0169] | 1-45 |
| A | CN 112202484 A (HUAWEI TECHNOLOGIES CO., LTD.) 08 January 2021 (2021-01-08) entire document | 1-45 |
| A | WO 2020211586 A1 (TELECOMMUNICATIONS SCIENCE AND TECHNOLOGY RESEARCH INSTITUTE CO., LTD.) 22 October 2020 (2020-10-22) entire document | 1-45 |
| A | WO 2020167679 A1 (VIASAT INC.) 20 August 2020 (2020-08-20) entire document | 1-45 |
| A | NOKIA et al. "NTN timers and Common Delay update in moving satellite scenario" *3GPP TSG-RAN WG2 Meeting #112 Electronic, R2-2009984,* Vol. , No. , 13 November 2020 (2020-11-13), ISSN: , entire document | 1-45 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 March 2022** | **07 April 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/143991**

| Patent document cited in search report | | | Publication date (day/month/year) | Patent family member(s) | | | Publication date (day/month/year) |
|---|---|---|---|---|---|---|---|
| CN | 111385013 | A | 07 July 2020 | US | 2021328659 | A1 | 21 October 2021 |
| | | | | EP | 3893409 | A1 | 13 October 2021 |
| | | | | WO | 2020135695 | A1 | 02 July 2020 |
| CN | 112202484 | A | 08 January 2021 | WO | 2021004233 | A1 | 14 January 2021 |
| WO | 2020211586 | A1 | 22 October 2020 | KR | 20210153113 | A | 16 December 2021 |
| | | | | EP | 3958479 | A1 | 23 February 2022 |
| | | | | CN | 111835395 | A | 27 October 2020 |
| WO | 2020167679 | A1 | 20 August 2020 | EP | 3921956 | A1 | 15 December 2021 |
| | | | | IL | 284846 | D0 | 31 August 2021 |
| | | | | CN | 113424464 | A | 21 September 2021 |
| | | | | KR | 20210126062 | A | 19 October 2021 |
| | | | | SG | 11202107660 X | A | 30 August 2021 |
| | | | | CA | 3129071 | A1 | 20 August 2020 |
| | | | | AU | 2020221058 | A1 | 29 July 2021 |
| | | | | BR | 112021014912 | A2 | 28 September 2021 |
| | | | | IN | 202117035981 | A | 19 November 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110082473